# EUROPEAN PATENT APPLICATION

(11) **EP 4 357 199 A1**
(43) Date of publication of application: **24.04.2024**
(21) Application number: 22204183.2
(22) Date of filing: 27.10.2022
(51) Int. Cl.: B60R 9/10, B62H 3/02

(54) **DEVICE FOR FIXING A BICYCLE FRAME TO A BIKE CARRIER**

(30) Priority: 21.10.2022 CN 202211292582
(71) Applicant: Carman Enterprise Co., Ltd., Yuhang District Hangzhou Zhejiang 311121 (CN)
(72) Inventor: Xianwei, Li, Hangzhou (CN)
(74) Representative: Paul & Albrecht Patentanwälte PartG mbB

(57) **Abstract**

The present invention relates to a device (11) for fixing a bicycle frame to a bike carrier, said device (11) comprising
a central section with a bicycle-side base body (13) defining a longitudinal axis (X) and a carrier-side base body (14) defining a lengthwise axis (Y), wherein the bicycle-side base body (13) and the carrier-side base body (14) are connected to each other by means of a joint arrangement,
a clamping device being arranged at the end region of the carrier-side base body (14) in order to connect the device to a yoke (9) of a bike carrier (2), and
a tensioning device to connect the device (11) to the frame of a bicycle.

## Description

The present invention relates to a device for fixing a bicycle frame to a bike carrier, said device comprising a central section with a bicycle-side base body defining a longitudinal axis and a carrier-side base body defining a lengthwise axis, wherein the bicycle-side base body and the carrier-side base body are connected to each other by means of a joint arrangement which is designed such that the orientation of the longitudinal axis of the bicycle-side base body relative to the lengthwise axis of the carrier-side base body can be adjusted, a clamping device being arranged at the end region of the carrier-side base body facing away from the joint arrangement in order to connect the device to a yoke of a bike carrier, wherein the clamping device comprises at least two clamping elements which form between them receptacle for the yoke of a bike carrier and are movable relative to one another between an open position, in which the clamping device can be attached to or removed from the yoke, and a clamping position, in which the clamping device engages around the yoke in a fixing manner, wherein the device further comprises actuating means in order to move the clamping elements relative to one another between the open position and the clamping position, and a tensioning device being arranged at the end region of the bicycle- side base body facing away from the joint arrangement in order to connect the device to the frame of a bicycle.

Such devices are often used in conjunction with load carriers for rear attachment to a motor vehicle such as an automobile. Load carriers are commonly designed as bike carriers and are used to transport bicycles outside the vehicle.

Conventional bike carriers comprise a supporting frame to which, for example, profile rails for receiving the wheels of bicycles are attached or can be attached, and it its front end a connecting device by means of which the bike carrier can be attached to the connection head of a conventional towing hook.

To attach the bicycles they are inserted with their wheels into the profile rails and secured against loosening by means of suitable fasteners, for example a tensioning belt. When accelerating or braking a vehicle provided with such a bike carrier, however, high forces are exerted on the fixed bicycles, so that fixing only in the area of the wheels is usually not sufficient. For this reason, bike carriers usually have a yoke that extends vertically upwards from the supporting frame. This yoke is often made of a bent tube profile and serves to additionally support the frame of the bicycle inserted into the profile rails by means of a suitable connecting device. In this way, it is ensured, that the bicycles are sufficiently fixed to the bike carrier.

Such a device for fixing a bicycle frame to a bike carrier is known from EP 3 760 487 A1. This device comprises a base body defining a longitudinal axis, a clamping device being arranged at one end region of the base body in order to connect the base bode to a yoke of a bike carrier and a tensioning device being arranged at the other end region of the base body in order to connect the base body to the frame of a bicycle. The base body is designed as a straight tube.

Such a device has proven itself in principal. However, it is sometimes considered as disadvantageous, that, in particular, when several bikes should be transported on a bike carrier, the front bike may be an obstacle when the device should be mounted to the yoke of a bike carrier and the frame of a bike which is arranged behind the front bike.

Accordingly, it is an object of the present invention, to provide a different device for fixing a bicycle to a bike carrier which can be used in a very versatile manner and avoids the above mentioned disadvantages.

This object is solved by a device of the kind mentioned above in that the carrier-side base body is mounted rotatably about the lengthwise axis with respect to the joint arrangement, in particular to an adjacent joint element (20) of the joint arrangement, and the actuating means are designed such that a rotation of the joint arrangement about the lengthwise axis of the carrier-side base body in a closing direction moves the clamping elements relative to one another in a direction of their clamping position.

The invention is based on the consideration to provide a joint arrangement practically in the middle of the device so that the two base bodies extending between the joint arrangement and a clamping device or a tensioning device, respectively, can be positioned in the shape of a V such that they are guided around an obstacle, which may be positioned in the direct line between the yoke of a bike carrier and the frame of a bicycle to be fixed. Furthermore, by means of such a joint arrangement, the effective length of the device extending between the tensioning device and the clamping device can be adjusted.

In other words, the angle included between the longitudinal axis of the bicycle- side base body and the lengthwise axis of the carrier- side base body can be adjusted. It is not necessary, that the longitudinal axis of the bicycle-side base body and the lengthwise axis of the carrier-side base body intersect each other. They can also be arranged offset from one another. Accordingly, the angle included between the axes can be seen in a side view.

According to the invention, it may be provided that a rotation of the joint arrangement, in particular a joint element of the joint arrangement next to the carrier-side base body relative to the latter, together with the other parts of the joint arrangement, for example another joint element, and the bicycle-side base body and the tensioning device leads to a movement of the clamping elements into the direction of their clamping position or, in particular, also in the direction of their open position. The joint arrangement and the other parts of the device are easily accessible to the operator as it stands away from the yoke of a bike carrier, when the device has been mounted thereon.

Preferably, the actuating means are designed such that a rotation of the joint arrangement in an opening direction opposite to the closing direction moves the clamping elements relative to one another in the direction of the open position. In this way, the joint arrangement, in particular a joint element of the joint arrangement next to the carrier-side base body relative to the latter, together with the other parts of the joint arrangement, for example another joint element, and the bicycle-side base body and the tensioning device about the lengthwise axis of the carrier-side base body leads to a movement of the clamping elements into their open position.

The device according to the invention may also have an alignment mechanism which is designed such that the joint arrangement can be rotated about the longitudinal axis of the base body in the closing direction, when the clamping elements are in their clamping position, in order to align the bicycle-side base body for attachment to the frame of a bike. In other words, it is provided that the joint arrangement is used on the one hand to actuate the clamping device by rotating it about the lengthwise axis of the carrier- side base body in an opening direction or in a closing direction, but on the other hand it is also possible to change the rotational position of the joint arrangement at the same time, even if the clamping elements are in the clamping position. In concrete terms, this is achieved by turning the clamping device further in the closing direction. Such an alignment mechanism is necessary because, for example, when using the device according to the invention for supporting bicycles inserted in a bike carrier, the joint arrangement, the bicycle- side base body and the tensioning device must be adapted to the position and the orientation of the bicycle frame.

According to a further embodiment of the present invention, the actuating means may comprise a coupling rod which extends axially displaceable in the carrier- side base body between the clamping device and the joint arrangement and is operatively connected to the joint arrangement in such a way that a rotary movement of the joint arrangement can be converted into a translational movement of the coupling rod in order to move the clamping elements in the direction of their clamping position or in the direction of their open position. In other words, a kinematic connection between the clamping device and the joint arrangement is realized by converting a rotary movement of the joint arrangement into a translational movement of the coupling rod so that the latter can transmit the movement to the clamping device arranged at the other end region of the carrier- side base body.

Preferably, the joint arrangement, in particular one joint element, is operatively connected to the coupling rod via a threaded connection. Such a threaded connection is basically a simple and efficient way to convert a rotary movement into a translational movement. In conjunction with this, the coupling rod can be mounted axially displaceable but in a torque-proof manner in the carrier- side base body in order to prevent the coupling rod from rotating, when the joint arrangement is turned. This ensures that the rotary movement of the joint arrangement is exclusively converted into a translational movement of the coupling rod. The torque-proof mounting of the coupling rod in the base body can be achieved, for example, by feather key arranged in the coupling rod which engages in a corresponding groove formed in the base body, or by a suitable cross-sectional profile which extends into a corresponding opening in the base body. Alternatively, it is also conceivable that the coupling rod is rotatably mounted in the carrier- side base body. In this case, the coupling rod must be prevented from turning in some other way when a rotary movement of the joint arrangement is to be converted into a translational movement of the coupling rod. For example, this can be done by manually holding a section of the coupling rod protruding from the carrier- side base body.

In concrete terms, the alignment mechanism may comprise coupling means with an inner coupling element operatively connected to the coupling rod by means of a threaded connection, and an outer coupling element which is connected to the joint arrangement, in particular a joint element, in a torque-proof manner, the inner and outer coupling element corresponding to each other such that they are always coupled in a torque-proof manner to each other during rotation of the joint arrangement, when the clamping elements are outside their clamping position, and that they are coupled in a torque-proof manner to each other, when the joint arrangement is being rotated in the opening direction, and are decoupled from each other, when the joint arrangement is being rotated in the closing direction, when the clamping elements are in their clamping position, so that the joint arrangement, the bicycle- side base body and the tensioning device can be aligned according to the orientation of a frame of a bicycle by rotation in the closing direction, when the clamping elements are in their clamping position.

This design is based on the consideration of connecting one coupling element to the coupling rod and connecting another coupling element to the clamping device in a torque-proof manner, so that a coupling connection can be realized between the two coupling elements. It is intended that the coupling elements move uniformly and are thus coupled to each other as long as the clamping elements are outside their clamping position. This is necessary in order to be able to move the clamping elements both in the direction of their clamping position and in the direction of their open position by turning the joint arrangement about the lengthwise axis of the carrier- side base body. If, on the other hand, the clamping elements are in their clamping position, it is necessary to be able to move them out of the clamping position by turning the clamping device in its opening direction if the device is to be separated from the yoke of a bike carrier. On the other hand, the clamping device can be aligned if the clamping elements are in their clamping position and the clamping device is turned further in the closing direction. In this case, the decoupling of the two coupling elements from each other does not increase the clamping force exerted by the clamping elements on the yoke, but allows the joint arrangement, the bicycle-side base body and the tensioning device, i.e. a section of the device comprising these components to be aligned.

According to an embodiment of the invention, it is provided that the inner coupling element and the outer coupling element are in engagement with each other by means of suitable engagement means. The engagement means may comprise a toothing formed on the inner coupling element and a counter-toothing formed on the outer coupling element, which may in particular be formed as a sawtooth profile. Such a toothing is a simple way of bringing the two coupling elements into engagement with each other. The sawtooth profile design ensures that the two coupling parts are always coupled to each other in one direction of rotation, presently in the opening direction so that both coupling parts perform identical rotary movements. In the other direction of rotation, in this case the closing direction, basically the two coupling elements are also engaged. However, the momentum between the coupling elements is not transmitted via tooth flanks perpendicular to the direction of movement, but via tooth flanks oblique to the direction of movement, so that, when a corresponding counterforce occurs, as it is the case when the clamping elements are in their clamping position, a relative displacement of the two coupling elements takes place along the obliquely oriented tooth flanks. The teeth are then briefly disengaged so that the two coupling elements are uncoupled from each other. This allows the joint arrangement to be turned further in the closing direction when the clamping elements are in their clamping position.

Preferably, the toothing and the counter-toothing are formed on mutually directed end faces of the inner coupling element and the outer coupling element. As a result, when aligning the tensioning device - when the clamping elements are in their clamping position - the movement of the two coupling elements over the obliquely oriented tooth flanks is accompanied by an axial displacement of the two coupling elements relative to each other.

The toothing and the counter-toothing preferably extend over an annular region which is formed concentrically with respect to the longitudinal axis of the base body. In addition, the teeth of the toothing and the counter-toothing can extend in straight line in the radial direction. This design also ensures that the two coupling elements are always arranged concentrically to each other and that the threaded connection of the inner coupling element to the coupling rod or the attachment of the outer coupling element to the tensioning device ensures that the corresponding parts are always centered to each other.

According to a further embodiment of the invention, the inner coupling element and the outer coupling element are axially pressed against each other by pressure means. This ensures that - as long as the clamping elements are outside their clamping position - the two coupling elements are coupled together, although the momentum in the closing direction is transmitted via the obliquely oriented tooth flanks. The compressive force counteracts the tendency of the two coupling elements to shift axially relative to each other as a result of a torque transmission via the obliquely oriented tooth flanks. If, on the other hand, the clamping elements are clamped in their clamping position, the compressive force is overcome against the acting clamping force, so that an axial displacement of the coupling elements relative to each other against the compressive force generated by the pressure means is possible. In consequence, it is possible to rotate the two coupling elements relative to each other and thus to align the bicycle-side base body and the tensioning device.

Advantageously, the pressure means comprise a spring, in particular a helical compression spring, in order to press the inner coupling element and the outer coupling element against each other. The use of such a spring, by selecting the spring with regard to the spring constant or, if necessary, by means of adjustment means available, by means of which the pretensioning force of the spring can be adjusted, enables an exact presetting of the compressive force to be applied, with which the two coupling elements are pressed against each other.

Preferably, the coupling means also include a guide bushing, which is screwed onto the coupling rod and on which the inner coupling element is mounted axially slidably. The coupling means may further comprise a housing element which receives the inner coupling element, is fixedly connected to the guide bushing and comprises guiding means, which are engaged with suitable counter means of the inner coupling element such that the inner coupling element is connected to the housing element in a torque-proof manner but axially displaceable relative thereto. A guide bushing screwed onto the coupling rod allows the coupling means to be designed in such a way that the inner coupling element is not screwed directly onto the coupling rod. A housing element fixedly connected to the guide bushing, the housing element surrounding the inner coupling element and thus defining an interior space in which the inner coupling element is mounted axially displaceable but fixed in a torque-proof manner to the unit of guide bushing and housing element, allows an integral construction so that the coupling means can be provided as a pre-assembled unit. This considerably simplifies the assembly of the device according to the present invention.

The guiding means may comprise a plurality of, in particular four radially projecting protrusions being distributed over the circumference, and the counter means may comprise axially extending grooves in engagement with these. This creates a shaft-to-collar connection between the housing element and the inner coupling element while at the same time an axial mobility of the inner coupling element relative to the housing element is guaranteed. The spring used to press the inner coupling element and the outer coupling element against each other is preferably supported against the housing element and the inner coupling element.

Preferably, the outer coupling element comprises connection means for attachment to the joint arrangement, in particular the joint arrangement at to the carrier-side base body. For this purpose, the joint element may be formed in a two-part design, wherein two parts are screwed together and the outer coupling element is clamped between these two parts. In order to avoid an unintended rotational movement of the outer coupling element relative to the joint arrangement, corresponding holding deepenings may be formed in the outer contour of the outer coupling element into which corresponding holding protrusions formed in the joint element engage. The joint element may comprise or consist of two parts that are screwed together radially with respect to the lengthwise axis so that the outer coupling element is clamped therebetween. This makes it possible to achieve a robust torsionally and axially rigid connection with the joint element, which enables the transmission of corresponding torques.

The joint arrangement and at least one clamping element are preferably clamped against the carrier- side base body when the clamping elements are in their clamping position. In consequence, the clamping elements are simultaneously secured against unintentional release by bracing against the carrier- side base body and the associated frictional forces.

Advantageously, the coupling rod is connected in a torque-proof manner to a pressure element, which can be brought into engagement with at least one clamping element in a torque-proof manner, in order to clamp the joint arrangement and the at least one clamping element against the carrier- side base body. The pressure element can be arranged at one end of the coupling rod and protrudes radially from it in order to engage with the clamping element. Specifically, the at least one clamping element can have a deepening, in particular in the shape of a V, with which the pressure element can be brought into engagement. In this case, the pressure element has a counter- contour corresponding to the V-shaped deepening. The V-shaped deepening also prevents unintentional rotation of the coupling rod about the lengthwise axis of the carrier- side base body when the pressure element is in engagement with the deepening.

In a further embodiment of the invention, one clamping element can be arranged fixedly on the base body as a stationary clamping element, and the other clamping element is pivotably mounted on the stationary clamping element. In particular, the swivel axis of the pivoting clamping element can be skewed to the lengthwise axis of the carrier- side base body. This allows the pivoting clamping element to be swiveled out to attach the device to theyoke of a bike carrier.

Preferably, both clamping elements each have a contact surface for contact with a yoke of a bike carrier. Concretely, the contact surfaces may be formed substantially as a partial segment of a shell of a circular cylinder. The contact surfaces can have a friction-enhancing surface, for example by means of rubber inserts or by means of a suitable, in particular continuous coating. Furthermore, an insert element may be provided between the contact surfaces and the yoke of a bike carrier in order to adapt to different sizes of the profile of a yoke. This enables a stable attachment to the yoke of a bike carrier.

To connect the stationary clamping element to the base body, the latter may have a recess, in particular an annular recess, into which the carrier- side base body extends, the carrier- side base body in particular being bonded to the stationary clamping element. In principle, it is also conceivable to weld or solder the base body to the stationary clamping element, or to connect it using a force-locking press connection, or to screw the stationary clamping element onto the carrier- side base body using a threaded connection.

According to a preferred embodiment, the joint arrangement is formed as a pivot joint defining a pivot axis, which extends transversely, in particular perpendicularly, to the longitudinal axis of the bicycle-side base body and to the lengthwise axis of the carrier-side base body. Such a joint arrangement formed as a pivot joint allows an easy and space saving design. In concrete terms, the joint arrangement may comprise two joint elements, wherein one joint element is fixedly attached to or a part of the bicycle-side base body and the other joint element is fixedly attached to or a part of the carrier-side base body or held rotatably at the carrier-side bade body. In other words, the joint arrangement is formed by two joint elements, each of which is held at one of the base bodies. A pivot axis extending perpendicularly to the longitudinal axis and the lengthwise axis does not necessarily mean that the pivot axis intersects the longitudinal axis and/or the lengthwise axis. Moreover, it is sufficient, that the direction of the pivot axis extends perpendicularly to the direction of the longitudinal axis and to the direction of the lengthwise axis.

The joint elements can be movable, in particular translationally displaceable relative to one another between a blocking position, in which they are in engagement with each other such that the bicycle-side base body and the carrier-side base body are fixed relative to one another, and a release position, in which the joint elements are out of engagement from each other, such that the base bodies can be moved relative to one another in order to adjust the angle included there between. Accordingly, the joint elements can be moved relative to one another, in particular in the direction of the pivot axis, wherein they can be brought out of engagement so that a rotation of the joint elements relative to one another and, consequently, with the base bodies attached thereto, is possible, and a blocking position, in which they engage with each other so that the angle included between the longitudinal axis of the bicycle-side base body and the lengthwise axis of the carrier-side base body cannot be varied.

For this purpose, each joint element may comprise an engagement toothing, in particular a face toothing, facing towards the corresponding toothing of the other joint element respectively such that the engagement toothings of the joint element are in engagement with each other, when the joint elements are in their blocking position, and out of engagement from each other, when the joint elements are in their release position. In other words, in their release position, the joint elements are spaced apart from each other such that the engagement toothings come out of engagement from each other. Preferably, the engagement toothings of the joint element extend over an annular region which is formed concentrically with respect to the pivot axis. In this way, the joint elements are positioned relative to one another also perpendicularly to the pivot axis.

Furthermore, the joint elements may comprise guiding means, by means of which they are guided perpendicularly to the pivot axis. Such guiding means may comprise a guiding projection formed at one of the joint elements, which engages into a corresponding guiding recess formed at the other joint element. In this way, it is excluded, that the joint elements can be moved transversely to the pivot axis relative to one another.

According to a preferred embodiment, the joint elements are biased towards their release position, in particular by means of a spring, preferably by means of a helical compression spring. A helical compression spring may be arranged such that it is supported against the head of the pivot pin at one end and against a corresponding contact surface formed at the opposite joint element.

Arresting means may be provided in order to arrest the joint elements in their blocking position. Such arresting means are useful in order to avoid an unintentional movement of the base bodies relative to one another.

Preferably, the joint arrangement comprises a pivot pin extending through both joint elements, wherein the pivot pin defines the pivot axis. In other words, both joint elements are held rotatably about the pivot pin.

The arresting means may comprise an arresting lever, which is pivotably held at one end region of the pivot pin about a swivel axis extending perpendicularly to the pivot axis of the pivot pin such that the arresting lever can be moved pivotably between an arresting state, in which the joint elements are pushed together such that they are in engagement with each other, and a release state, in which the joint elements can be spaced apart from each other such that they are out of engagement and the joint elements can be rotated relative to one another about the pivot axis. Consequently, the arresting lever may be held pivotably at an end region of the pivot pin which extends out of the joint elements.

The arresting lever may comprise an arresting surface, which extends parallel to the swivel axis and is spaced apart from the swivel axis such that the two joint elements are pressed together between a head of the pivot pin and the arresting surface into their blocking position, when the arresting lever is in its arresting state. Accordingly, one of the joint elements may be in direct contact with the head of the pivot pin so that the joint elements are pressed together between the head of the pivot pin and the arresting surface of the arresting lever.

The tensioning device may comprise a basic body, which is provided with an abutment surface for the frame of a bicycle, and a tensioning element being connected to the basic body and formed in such a way that the frame can be tensioned between the tensioning element and the abutment surface of the basic body. Concretely, the tensioning element may be formed as a tensioning belt, which is connected at its one end region to the basic body, in particular articulately connected, and may comprise at its free end region a latching toothing by means of which the tensioning belt can be latched in a corresponding latching mechanism which is fastened to the basic body of the tensioning device.

Thus, for example, the frame of a bicycle can be tensioned on the tensioning device in a manner known per se by bringing the frame into contact with the abutment surface, placing the tensioning belt with its free end around the bicycle frame and latching it in a corresponding latching mechanism with a toothing formed on the tensioning belt.

The tensioning device may also include a locking mechanism which is designed such that unintentional opening of the tensioning element is prevented. Specifically, this can include a lock operable with a key. This prevents, for example, the accidental loosening of the tensioning device in the event of vibrations, such as those which can occur when using the device on a bike carrier when driving over bumps in the ground, so that sufficient securing of a bicycle placed on the bike carrier would no longer be given. In addition, a lock which can be operated with a key is an anti-theft device if, for example, a motorvehicle having such a bike carrier is placed on a car parking. The locking mechanism not only prevents against unintentional opening of the tensioning element, but also prevents the clamping device from being released from the first object, as the joint arrangement cannot be rotated about the lengthwise axis of the carrier- side base body as long as a frame of a bicycle is tensioned between the tensioning element and the abutment surface of the basic body.

Preferably, the carrier-side base body and/or the bicycle-side base body is/are formed as a tubular component. Furthermore, the tensioning device may be mounted rotatably about the longitudinal axis of the bicycle-side base body thereto. In concrete terms, a holding rod may be provided which is arranged inside the bicycle-side base body and can rotate freely about the longitudinal axis. The basic body of the tensioning device may be fixed in a torque-proof manner to the holding rod, for example screwed thereto.

For further details of the present invention, references made to the subclaims as well as to the enclosed drawing and the corresponding description of the embodiment shown. In the drawing shows:
- Figure 1: a bike carrier attached to the rear of a motor vehicle having a device according to the present invention in a perspective view;
- Figure 2: a bike carrier shown in figure 1 in a detailed perspective view;
- Figure 3: the device according to the invention shown in figures 1 and 2 in a side view;
- Figure 4: the device of figure 3 in a completely folded state;
- Figure 5: the device shown in figure 3 in an extended state in a perspective view;
- Figure 6: the joint arrangement of the device of figure 3 in a detailed perspective view, wherein the joint elements are in their blocking position;
- Figure 7: the joint arrangement of the device of figure 3, wherein the joint elements are in their release position, in a detailed perspective view;
- Figure 8: the joint arrangement in a partial cross-sectional view, wherein the joint elements are in their blocking position;
- Figure 9: the joint arrangement in a partial cross-sectional view, wherein the joint elements are in their release position;

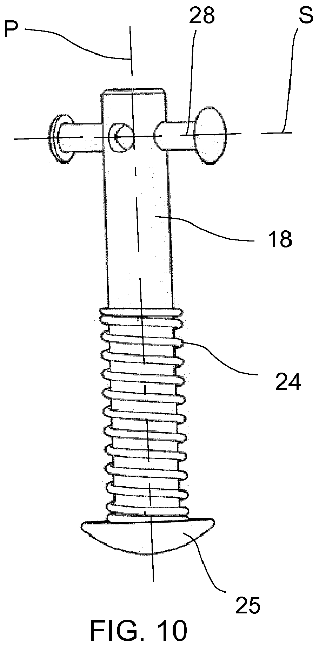

- Figure 10: the pivot pin of the device of figure 3 in a perspective view;

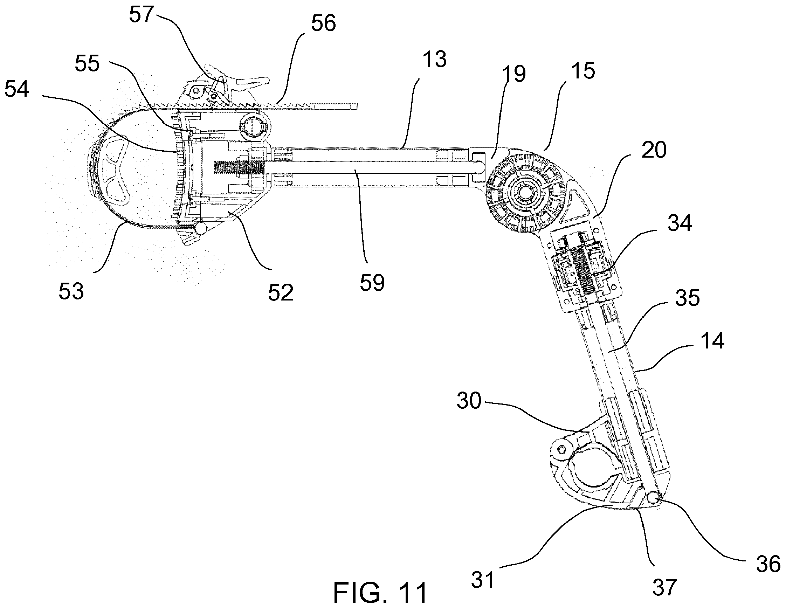

- Figure 11: the device of figure 3 in a cross-sectional view;

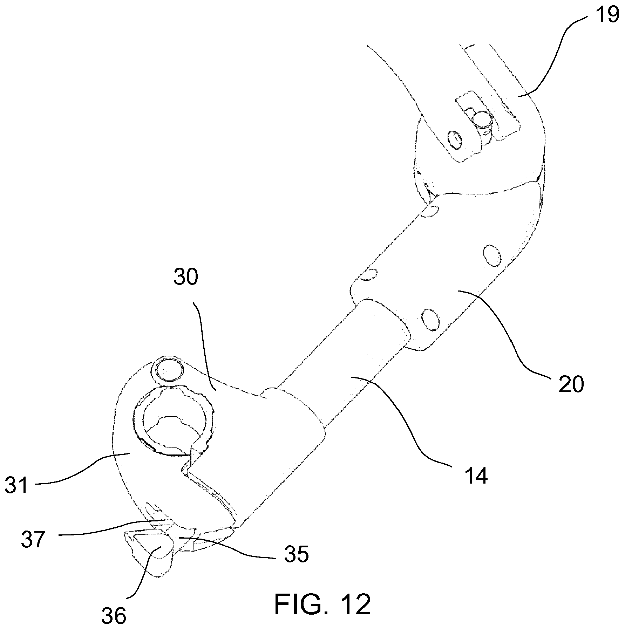

- Figure 12: the device of figure 3 in a partial perspective view showing the clamping device in the clamping elements are in their close state;
- Figure 13: the device of figure 3 showing the clamping device in a perspective view, wherein the clamping elements are in their open position;
- Figure 14: a joint element and the adjacent carrier-side base body of the device of figure 3 in a longitudinal sectional view;
- Figure 15: the coupling means of the device from figure 3 in a partially cutted perspective view;
- Figure 16: the guide bushing of the device from figure 3 in a perspective view;
- Figure 17: the housing element of the device from figure 3 in a perspective view;
- Figure 18: the inner coupling element of the device from figure 3 in a perspective view;
- Figure 19: the outer coupling element of the device from figure 3 in a perspective view; and

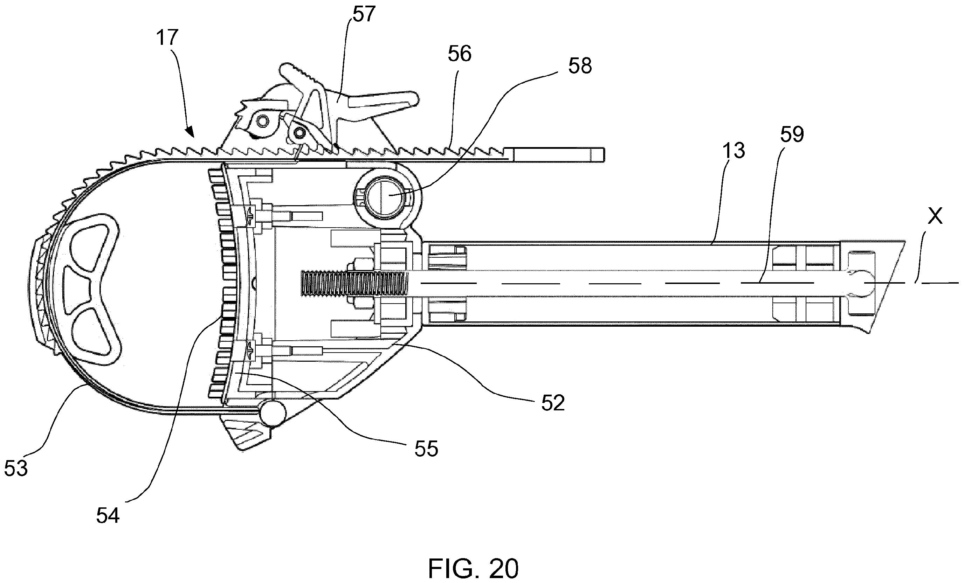

- Figure 20: the tensioning device and the bicycle-side base body of the device from figure 3 in a longitudinal sectional view

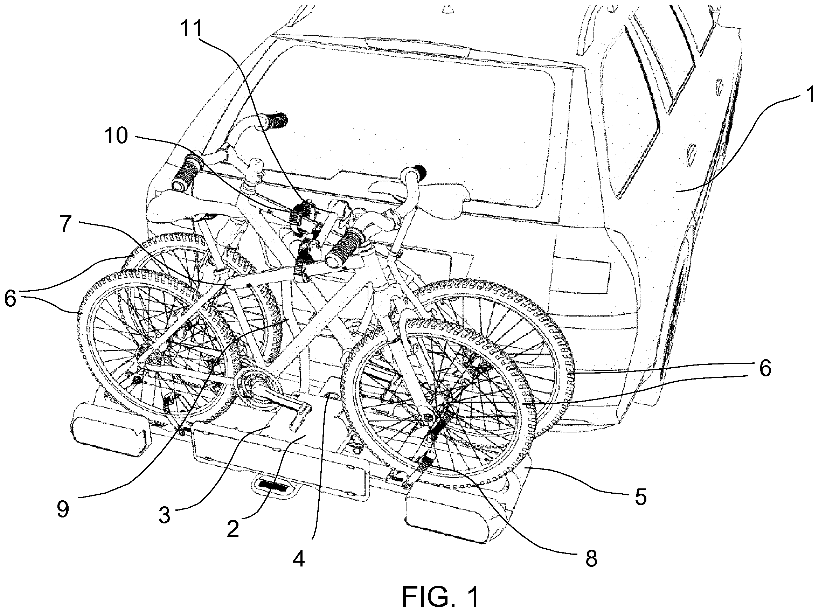

Figure 1 shows a motor vehicle 1 with a rear-mounted bike carrier 2, which has a supporting frame 3 and, at its front end, a connection device 4 for attachment to a trailer coupling of the motor vehicle 1. The bike carrier 2 further comprises a support structure 5 for receiving the wheels 6 of two bicycles 7. The wheels 6 of both bicycles 7 are positioned in corresponding deepenings of the support structure 5 and are fastened to them by means of a tension belt 8.

A vertically extending yoke 9 made of a bent tube profile is also fitted in the front end area of the supporting frame 3. At the upper end of the yoke 9, there are two devices 10, 11 for fixing a bicycle frame to the bike carrier according to this invention. One device 10 is connected to the frame of the front bicycle 7, whereas the other device 11 fixes the frame of the rear bicycle 7 to the yoke 9.

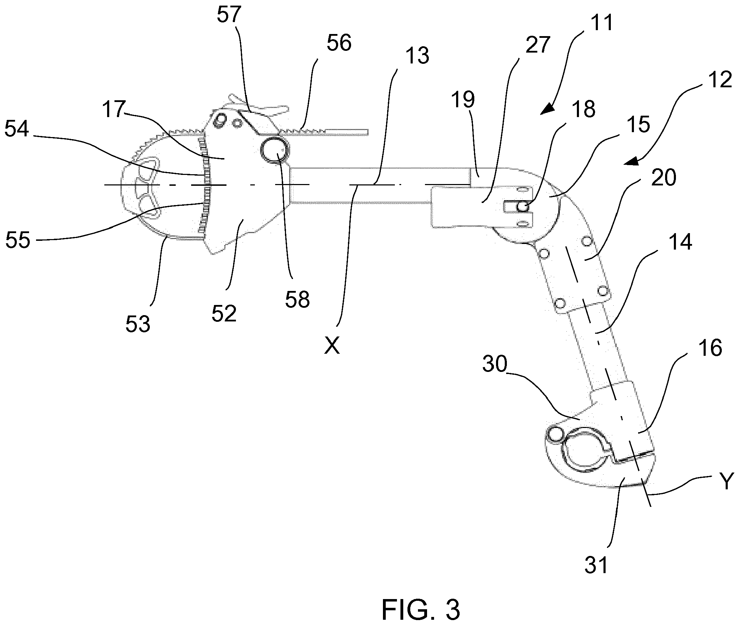

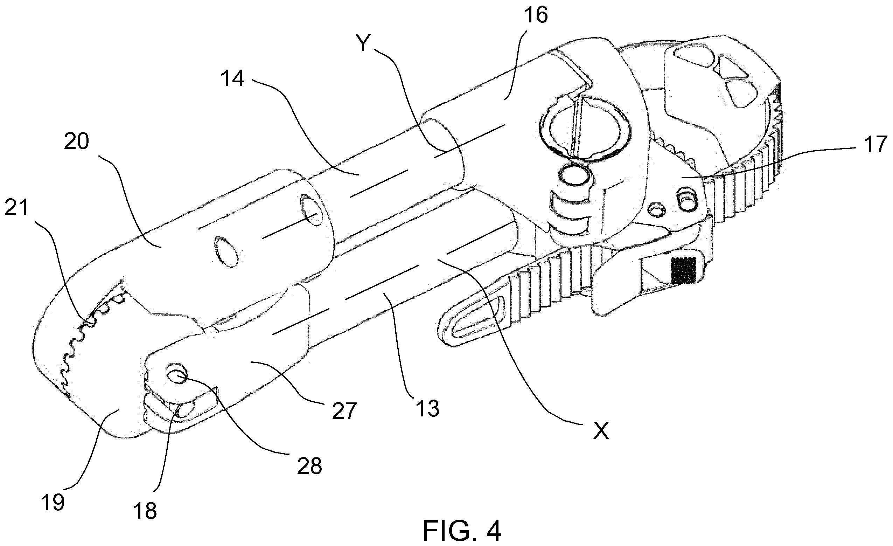

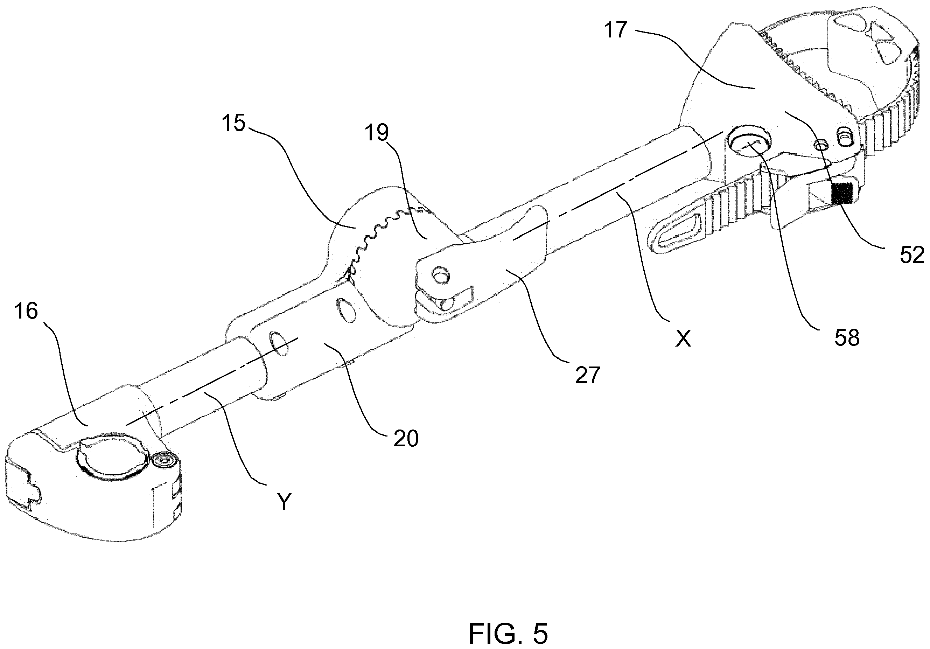

Figure 3 shows the device 11 according to the invention in detail. It comprises a central section 12 with a bicycle-side base body 13 in the form of a tube defining a longitudinal axis X. Furthermore, the central section 12 comprises a carrier-side base body 14 in the shape of a tube defining a lengthwise axis Y. The bicycle-side base body 13 and the carrier-side base body 14 are connected to each other by means of a joint arrangement 15 which is designed such that the angle included between the longitudinal axis X of the bicycle-side base body 13 and the lengthwise axis Y of the carrier-side base body 14 can be adjusted. The two extreme positions are shown in figure 4 and 5. In Figure 4, the angle included between the longitudinal axis X and the lengthwise axis Y is 0 degrees, wherein in figure 5 the angle included is 180 degrees.

At the end region of the carrier-side base body 14 facing away from the joint arrangement 15, a clamping device 16 is arranged in order to connect the device 11 to the yoke 9 of a bike carrier 2. At the end region of the bicycle-side base body 13 facing away from the joint arrangement 15, a tensioning device 17 is arranged in order to connect the device 11 to the frame of a bicycle 7.

By means of the joint arrangement 15 and the base bodies 13, 14 extending therefrom, an obstacle which may be given by the frame of a bicycle 7 between the yoke 9 and the frame of the bicycle 7 to be fixed can be circumvented. In other words, the device 11 can be guided around the obstacle.

In concrete terms, the joint arrangement 15 is formed as a pivot joint, wherein a pivot pin 18 defining a pivot axis P is provided. The pivot axis P extends perpendicularly to the direction of the longitudinal axis X of the bicycle-side base body 13 and to the direction of the lengthwise axis Y of the carrier-side base body 14.

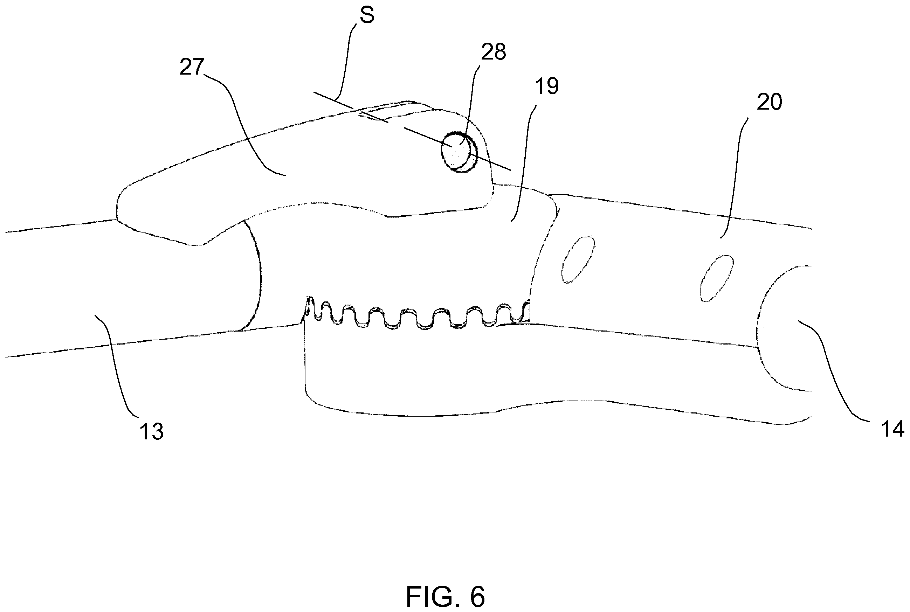

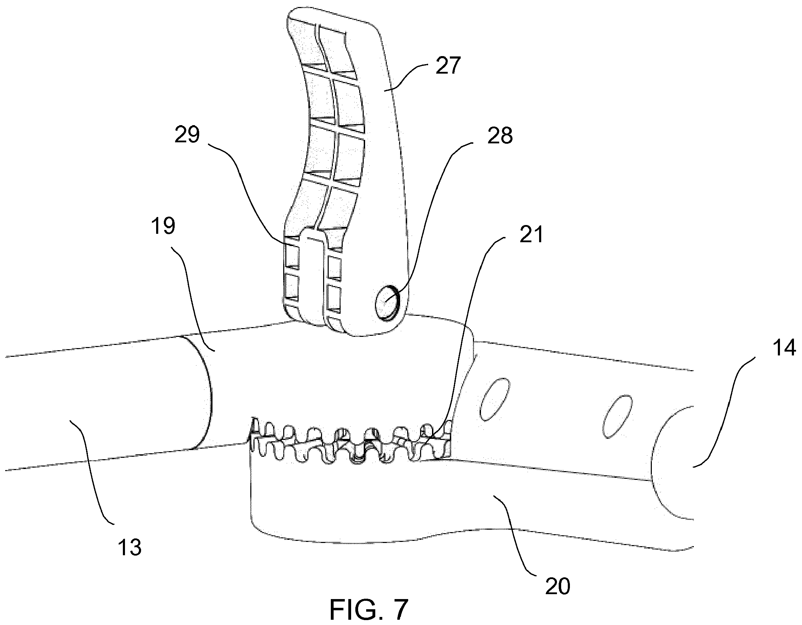

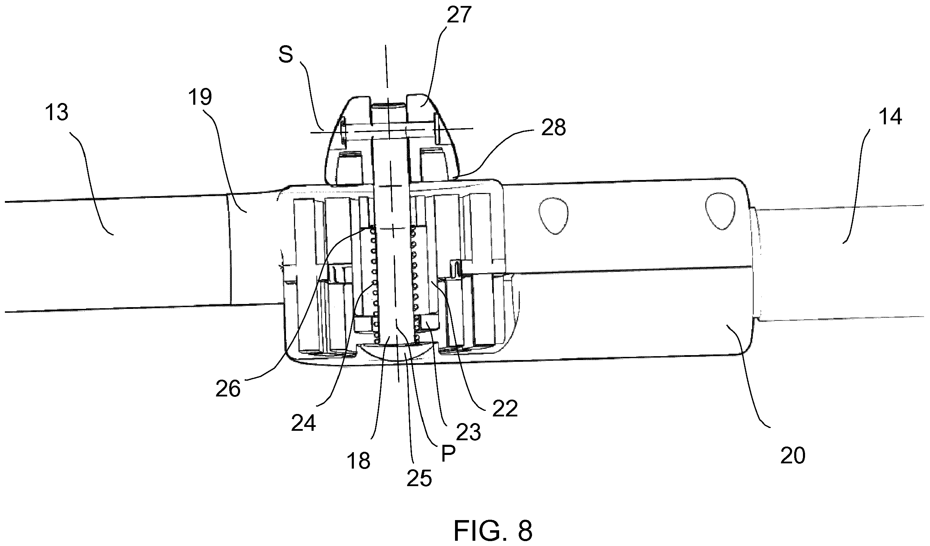

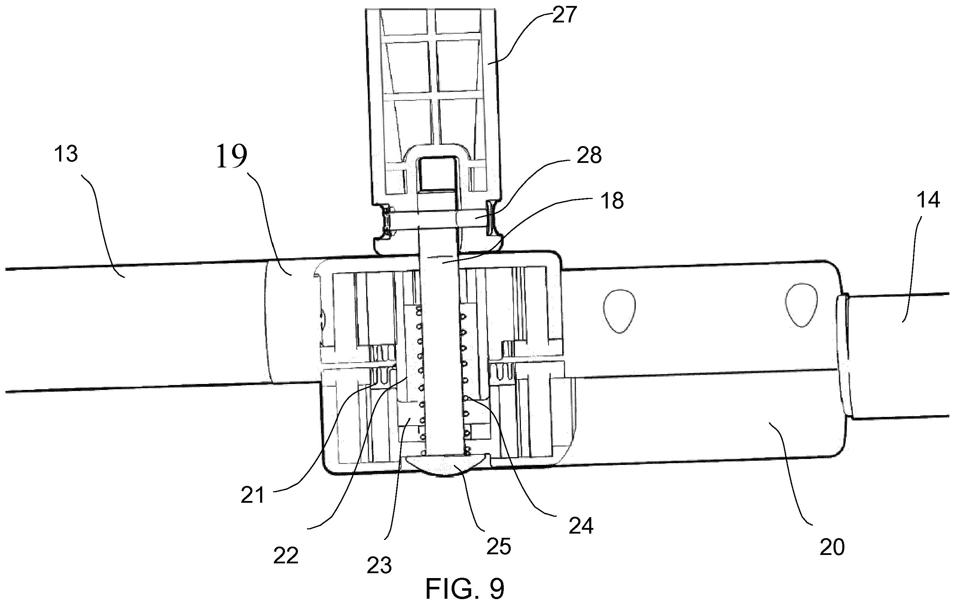

The joint arrangement 15 further comprises two joint elements 19, 20, wherein one joint element 19 is fixedly attached, presently clamped, to the bicycle-side base body 13 and the other joint element 20 is presently rotatably held at the carrier-side base body 14 about the lengthwise axis Y. As it is visible in particular in figures 6 and 7 or 8 and 9, the joint elements 19, 20 are translationally displaceable to one another in the direction of the pivot axis P between a blocking position, which is shown in figures 6 and 8, and a release position, which is shown in figures 7 and 9. Each joint element 19, 20 comprises a face engagement toothing 21 facing towards the other joint element 19, 20 which extend over an annular region formed concentrically with respect to the pivot axis P. In the blocking position, the engagement toothings 21 of the joint elements 19, 20 are in engagement with each other so that the bicycle-side base body and the carrier-side base body 14 are fixed relative to one another. In the release position, the toothings 21 are out of engagement from each other so that the base bodies 13, 14 can be pivoted relative to one another about the pivot axis in order to adjust the angle included therebetween. In this way, the device 11 can be adapted to the specific situation.

In order to guide the joint elements 19, 20 relative to one another, the joint element 19 (the upper joint element in figures 6 to 9) comprises a guiding protrusion 22, which extends into a corresponding guiding recess 23 formed in the other joint element 20. Furthermore, the joint elements 19, 20 are biased towards their release position by means of a helical compression spring 24. In concrete terms, the spring 24 supports against the head 25 of the pivot pin 18 and a corresponding contact surface 26 formed in the upper joint element 19.

Furthermore, arresting means are provided in order to arrest the joint elements 19, 20 in their blocking position. The arresting means comprise an arresting lever 27, which is pivotably held about a swivel axis S at the end region of the pivot pin 18 protruding from the joint element 19. The swivel axis S extends perpendicularly to the pivot axis P and is formed by a swivel pin 28, which is held at an end region of the pivot pin 18. The arresting lever 27 can be pivoted between an arresting state, which is shown in figures 6 and 8 and in which the joint elements 19, 20 are pushed together against the restoring force of the helical compression spring 24 such that the engagement toothings 21 engage each other, and a release state, which is shown in figures 7 and 9 and in which the joint elements 19, 20 can be spaced apart from each other such that the engagement toothings 21 are out of engagement and the joint elements 19, 20 can be rotated relative to one another about the pivot axis P. For this purpose, the arresting lever 27 comprises an arresting surface 29, which extends parallel to the swivel axis S. The arresting surface 29 is spaced apart from the swivel axis S such that the two joint elements 19, 20 are pressed together between the head 25 of the pivot pin 18 and the arresting surface 19 into their blocking position, when the arresting lever 27 is in its arresting state.

The clamping device 16 comprises two clamping elements 30, 31, wherein one clamping element 30 is fixed to the carrier- side base body 14 as a stationary clamping element and the other clamping element 31 is pivotably mounted on the stationary clamping element 30. The stationary clamping element 30 has an annular recess for attachment to the carrier- side base body 14, into which the base body 14 extends. The carrier- side base body 14 and the stationary clamping element 30 are bonded together.

The two clamping elements 30, 31 form between them a receptable for the yoke 9 and are movable relative to each other between an open position, in which the clamping device 16 can be attached to or removed from the yoke 9, and a clamping position, in which the clamping device 16 engages around the yoke 9 in a fixing manner.

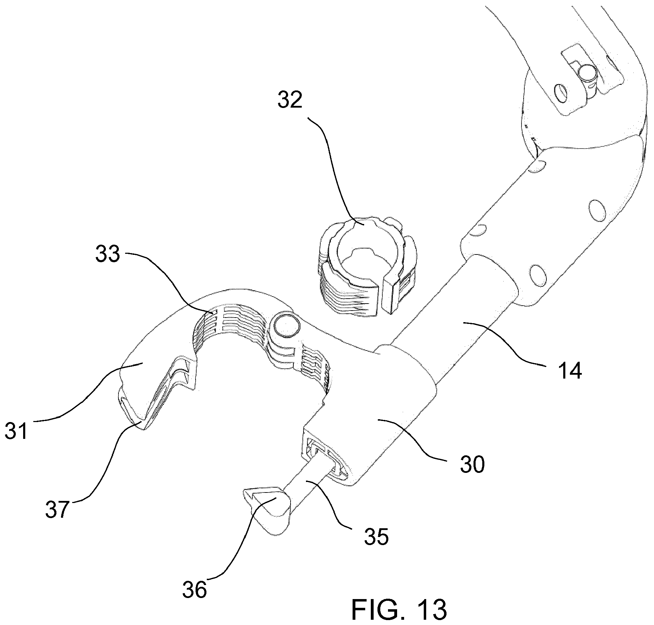

An insert element 32, which is shown in figure 13, may be provided between the clamping elements 30, 31 in order to adapt the dimension of the receptacle to the diameter of the respective yoke 9. Both clamping elements 30, 31 each have a contact surface 33 for contacting the yoke 9 of the bike carrier 2 or the insert element 32, wherein the contact surfaces 33 are substantially formed as a partial segment of a shell of a circular cylinder corresponding to the cross-section of the yoke 9.

To move the clamping elements 30, 31 between the open position and the closed position relative to one another, the device 11 further comprises actuating means 34 arranged such that rotation of the joint arrangement 15 together with the bicycle- side base body 13 and the tensioning device 17 about the lenghtwise axis Y in a closing direction moves the pivotable clamping element 31 in the direction of the clamping position and rotation of the joint arrangement 15 in an opening direction opposite to the closing direction moves the clamping element 31 in the direction of the open position.

In concrete terms, the actuating means 34 comprise a coupling rod 35 which extends axially displaceable in the carrier- side base body 14 between the clamping device 16 and the joint arrangement 15. The coupling rod 35 is operatively connected to the joint arrangement 15, specifically to the joint element 20, via a threaded connection, so that a rotary movement of the joint arrangement 15 can be converted into a translational movement of the coupling rod 35. At its end facing the clamping device 16, the coupling rod 35 is connected to a pressure element 36 in a torque-proof manner. This pressure element 36 can be engaged with a V-shaped deepening 37 of the pivotable clamping element 31 to move the pivotable clamping element 31 to the clamping position.

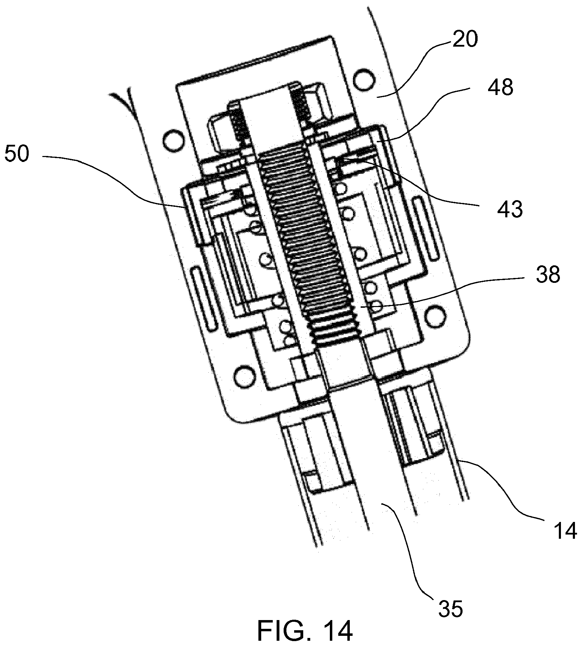

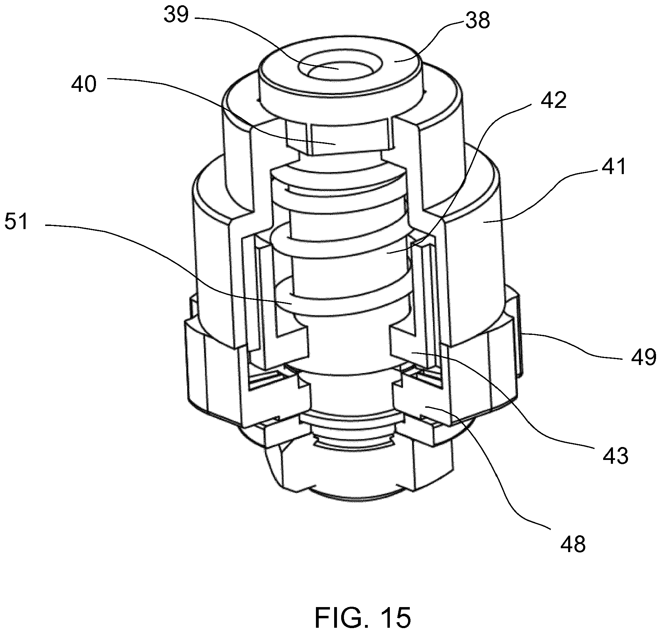

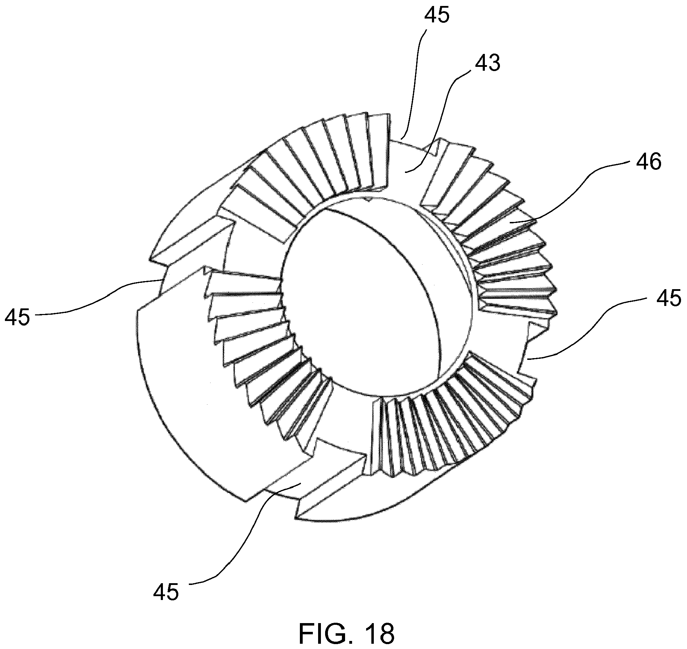

The device 11 further comprises an alignment mechanism which is designed such that the joint arrangement 15 can be rotated in the closing direction about the lengthwise axis Y of the carrier- side base body 14, when the two clamping elements 30, 31 are in their clamping position. The joint arrangement 15 together with the bicycle- side base body 13 and the tensioning device 17 can thus be aligned according to the position and the orientation of the bicycle frame. For this purpose, the alignment mechanism comprises coupling means, which are shown in detail in figures 14 to 19.

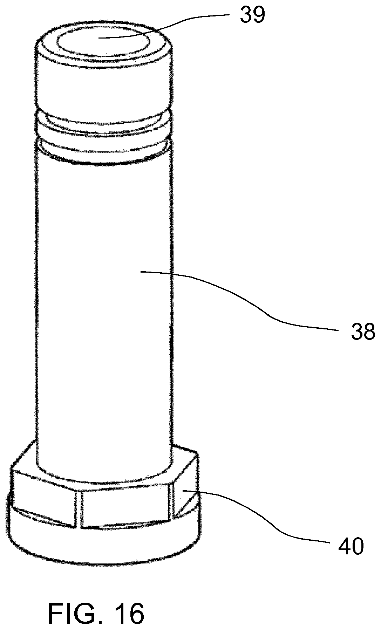

The coupling means comprise a guide bushing 38, which is screwed onto the coupling rod 35. The guide bushing 38 shown in figure 16 as an individual component has a passage opening 39 with an internal thread to accommodate the coupling rod 35, as well as an outer hexagonal profile 40 in one end area.

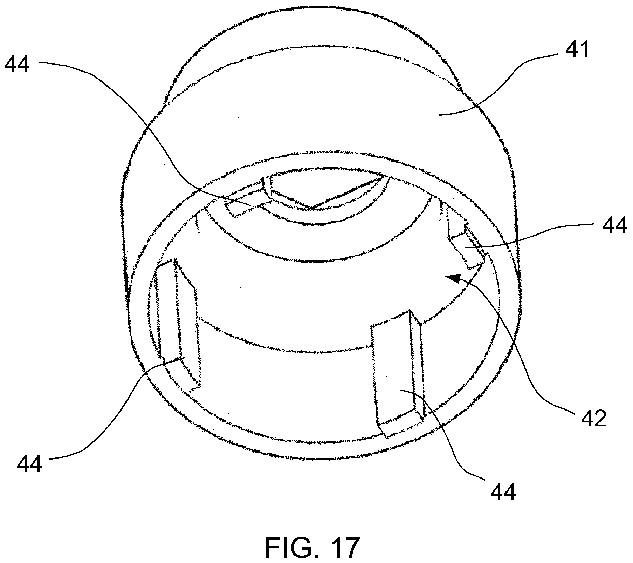

By means of this hexagonal profile 40, the guide bushing is connected to a housing element 41, which is shown in detail in figure 17, in a torque-proof and axially fixed manner. The housing element 41 defines an interior space 42 in which an inner coupling element 43 is received and connected to the housing element 41 in a torque-proof manner, but can be displaced axially relative to the housing element 41.

For this purpose, the housing element 41 has guiding means in the form of four circumferentially distributed radially projecting protrusions 44 which engage into corresponding counter-means in the form of axially extending grooves 45 formed in the inner coupling element 43. By means of this arrangement, the inner coupling element 43 is indirectly connected to the coupling rod 35 via a threaded connection.

The inner coupling element 43 has a toothing 46 with a sawtooth profile at one end face. The individual teeth extend in a radial direction over an annular area which is formed concentrically to the lengthwise axis Y of the carrier-side base body 14.

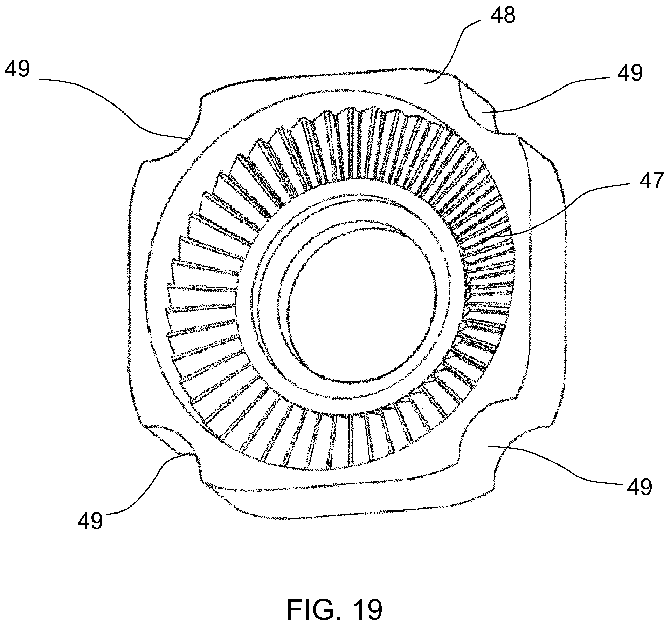

The toothing 46 is in engagement with a corresponding counter-toothing 47 of an outer coupling element 48, which is connected to the joint element 20 of the joint arrangement 15 in a torque-proof manner. Therefore, the outer coupling element 48 shown in detail in figure 19 is fixedly attached to the joint element 20 of the joint arrangement 15. In concrete terms, the joint element 20 comprises an opening open towards the carrier-side base body 14 into which the outer coupling element 48 is inserted. The opening is formed between two parts of the joint element 20 which are screwed together radially with respect to the lengthwise axis Y. The outer coupling element 48 comprises in its outer contour holding deepenings 49, into which corresponding holding projections 50 formed in the joint element 20 engage. In this way, a form- fit torque-proof connection between the outer coupling element 48 and the joint element 20 is achieved.

The coupling means further comprise a helical compression spring 51 by means of which the inner coupling element 43 and the outer coupling element 48 are pressed against each other. The helical compression spring 51 is supported against the housing element 41 and the inner coupling element 43.

By means of this arrangement it is realized that the inner coupling element 43 and the outer coupling element 48 correspond to one another in such a way that they are always coupled to one another in a torque-proof manner, when the clamping elements 30, 31 are outside their clamping position when the joint arrangement 15 is turned about the lengthwise axis Y of the carrier- side base body 14. When the clamping elements 30, 31 are in their clamping position, the two coupling elements 43, 48 are coupled to one another in a torque-proof manner, when the joint arrangement 15 is rotated in the opening direction, and the two coupling elements 43, 48 are uncoupled from one another, when the joint arrangement 15 is rotated in the closing direction. This makes it possible to align the joint arrangement 15 together with the bicycle-side base body 13 and the tensioning device 17 by turning it in the closing direction according to the orientation and position of the bicycle frame when the clamping elements 30, 31 are in their clamping position.

The tensioning device 17 has a basic body 52 and a tensioning element connected to it and designed as a flexible tensioning belt 53. An abutment surface 54 for the frame of the bicycle 7 is formed by an abutment component 55 screwed to the basic body 52. The flexible tensioning belt 53 is hingedly connected to the basic body 52 at its one end and has a latching toothing 56 at its free end by means of which the tensioning belt 53 can be latched into a latching mechanism 57, which is also fasted to the basic body 52. The tensioning device 17 further comprises a locking mechanism having a keyoperated lock 58. This prevents unintentional opening of the tensioning belt 53.

In order to allow the tensioning device 17 to be aligned with respect to the orientation of the frame of the bicycle 7 to be fixed, the tensioning device 17 is rotatably mounted to the bicycle-side base body 13, but axially held thereto. For this purpose, a holding rod 59 is arranged inside the bicycle-side base body 13 such that it can rotate freely. At its end facing away from the joint arrangement 15, the holding rod 59 is screwed to the basic body 52 of the tensioning device 17. Preferably, the basic body 52 abuts against an end face of the bicycle- side base body 13.

If the device 11 according to the present invention is to be attached to the bike carrier 2 shown in figure 1, the clamping elements 30, 31 must first be brought into their open position, as it is shown in figure 13. For this purpose, the joint arrangement 15 is turned in its opening direction until the pressure element 36 protrudes from the carrier-side base body 14 as far as it does not engage with the deepening of the pivotable clamping element 31. The pivotable clamping element 31 can then be opened so far that the clamping device 16 can be placed on the yoke 9 of the bike carrier 2.

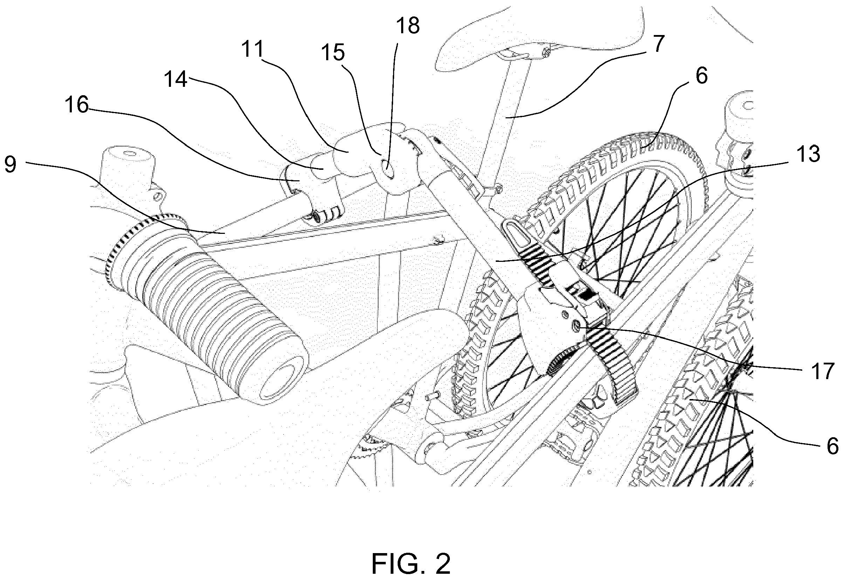

The joint arrangement 15 together with the bicycle-side base body 13 and the tensioning device 17 is then turned in its closing direction until the pressure element 36 has engaged into the V-shaped deepening of the pivotable clamping element 31 and the pivotable clamping element 31 has been brought into its clamping position. Thus, the two clamping elements 30, 31 grip the yoke 9 of the bike carrier 2 by fixing it as shown in figure 2.

After that, the joint arrangement 15 together with the bicycle-side base body 13 and the tensioning device 17 can be rotated about the lengthwise axis Y of the carrier-side base body 14 in the closing direction in order to align this section of the device 11 according to the orientation of the frame of the bicycle 7. Due to the sawtooth profile of the toothing 46 and the counter-toothing 47, the inner coupling element 43 can shift axially relative to the outer coupling element 48 against the force generated by the helical compression spring 51, when the clamping elements 30, 31 are in their clamping position.

Finally, the tensioning device 17 can be rotated about the longitudinal axis X of the bicycle-side base body 13 in order to adapt the tensioning device 17 according to the orientation of the bicycle frame.

At any time, the angle between the longitudinal axis X of the bicycle-side base body 13 and the lengthwise axis Y of the carrier-side base body 14 can be adjusted by bringing the arresting lever 27 out of its arresting state into its release state. In this way, the joint elements 19, 20 can move relative to one another in the direction of the pivot axis P so that the engagement toothings 21 of the joint elements 19, 20 come out of engagement. Then, the two joint elements 19, 20 can be rotated relative to one another about the pivot axis P in order to adjust the angle included between the longitudinal axis X and the lengthwise axis Y. When the desired angle has been achieved, the arresting lever can be rotated about its swivel axis S from its release state into its arresting state so that the joint elements 19, 20 are pressed together and the engagement toothings 21 come into engagement in their blocking position. In this way, the device can be flexibly adapted to different requirements and it is possible to circumvent an obstacle arranged directly between the yoke 9 and the frame of a bike 7 to be attached.

### REFERENCE CHARACTER LIST

- 1: motor vehicle
- 2: bike carrier
- 3: supporting frame
- 4: connection device
- 5: support structure
- 6: wheel
- 7: bicycle
- 8: tension belt
- 9: yoke
- 10: device
- 11: device
- 12: central section
- 13: bicycle-side base body
- 14: carrier-side base body
- 15: joint arrangement
- 16: clamping device
- 17: tensioning device
- 18: pivot pin
- 19: joint element
- 20: joint element
- 21: engagement toothing
- 22: guiding protrusion
- 23: guiding recess
- 24: helical compression spring
- 25: head
- 26: contact surface
- 27: arresting lever
- 28: swivel pin
- 29: arresting surface
- 30: clamping element
- 31: clamping element
- 32: insert element
- 33: contact surface
- 34: actuating means
- 35: coupling rod
- 36: pressure element
- 37: deepening
- 38: guide bushing
- 39: passage opening
- 40: hexagonal profile
- 41: housing element
- 42: interior space
- 43: inner coupling element
- 44: protrusion
- 45: groove
- 46: toothing
- 47: counter-toothing
- 48: outer coupling element
- 49: holding deepening
- 50: holding projection
- 51: helical compression spring
- 52: basic body
- 53: tensioning belt
- 54: abutment surface
- 55: abutment component
- 56: latching toothing
- 57: latching mechanism
- 58: lock
- 59: holding rod
- X: longitudinal axis
- Y: lengthwise axis
- P: pivot axis
- S: swivel axis

## Claims

1. Device (11) for fixing a bicycle frame to a bike carrier, said device (11) comprising
a central section with a bicycle-side base body (13) defining a longitudinal axis (X) and a carrier-side base body (14) defining a lengthwise axis (Y), wherein the bicycle-side base body (13) and the carrier-side base body (14) are connected to each other by means of a joint arrangement which is designed such that the orientation of the longitudinal axis (X) of the bicycle-side base body (13) relative to the lengthwise axis (Y) of the carrier-side base body (14) can be adjusted,
a clamping device being arranged at the end region of the carrier-side base body (14) facing away from the joint arrangement in order to connect the device to a yoke (9) of a bike carrier (2), wherein the clamping device (16) comprises at least two clamping elements (30, 31) which form between them receptacle for the yoke (9) of a bike carrier (2) and are movable relative to one another between an open position, in which the clamping device (16) can be attached to or removed from the yoke (9), and a clamping position, in which the clamping device (16) engages around the yoke (9) in a fixing manner, wherein the device further comprises actuating means (34) in order to move the clamping elements (30, 31) relative to one another between the open position and the clamping position, and
a tensioning device being arranged at the end region of the bicycle- side base body (13) facing away from the joint arrangement in order to connect the device (11) to the frame of a bicycle,
**characterized in that** the carrier-side base body (14) is mounted rotatably about the lengthwise axis (Y) with respect to the joint arrangement (15), in particular to an adjacent joint element (20) of the joint arrangement (15), and the actuating means (34) are designed such that a rotation of the joint arrangement (15) about the lengthwise axis (Y) of the carrier-side base body (14) in a closing direction moves the clamping elements (30, 31) relative to one another in a direction of their clamping position.

2. Device (11) according to claim 1, **characterized in that** it further comprises an alignment mechanism which is designed such that the joint arrangement (15) can be rotated about the lengthwise axis (Y) of the carrier-side base body (14) in the closing direction, when the clamping elements (30, 31) are in their clamping position, in order to align the bicycle-side base body (13) for attachment to a frame of a bicycle (7).

3. Device (11) according to claim 1 or 2, **characterized in that** the actuating means (34) are designed such that a rotation of the joint arrangement (15) in an opening direction opposite to the closing direction moves the clamping elements (30, 31) relative to one another in the direction of the open position.

4. Device (11) according to claim 1 or 2 and claim 3, **characterized in that** the actuating means (34) comprise a coupling rod (35) which extends axially displaceable in the carrier-side base body (14) between the clamping device (16) and the joint arrangement (15) and is operatively connected to the joint arrangement (15) in such a way that a rotary movement of the joint arrangement (15) can be converted into a translational movement of the coupling rod (35) in order to move the clamping elements (30, 31) in the direction of their clamping position or in the direction of their open position.

5. Device (11) according to claim 4, **characterized in that** the joint arrangement (15) is operatively connected to the coupling rod via a threaded connection.

6. Device (11) according to claim 2 and 5, **characterized in that** the alignment mechanism comprises coupling means having
an inner coupling element (43) operatively connected to the coupling rod (35) by means of a threaded connection, and
an outer coupling element (48) which is connected to the joint arrangement (15) in a torque- proof manner,
the inner and the outer coupling element (48) corresponding to each other such
that they are always coupled in a torque- proof manner to each other during rotation of the joint arrangement (15) relative to the carrier-side base body (14), when the clamping elements (30, 31) are outside their clamping position, and
that they are coupled in a torque- proof manner to each other, when the joint arrangement (15) is rotated in the opening direction, and are decoupled from each other, when the joint arrangement (15) is rotated in the closing direction, when the clamping elements (30, 31) are in their clamping position,
so that the joint arrangement (15) and the bicycle-side base body (13) can be aligned according to the orientation of the frame of a bicycle (7) by rotation in the closing direction, when the clamping elements (30, 31) are in their clamping position.

7. Device (11) according to claim 6, **characterized in that** the inner coupling element (43) and the outer coupling element (48) are in engagement with each other by means of suitable engagement means, wherein, in particular, the inner coupling element (43) and the outer coupling element (48) are axially pressed to each other by pressure means, that preferably comprise a spring, in particular a helical compression spring (51), in order to press the inner coupling element (43) and the outer coupling element (48) against each other, wherein, preferably, the engagement means comprise a toothing (46) formed in the inner coupling element (43) and a counter-toothing (47) formed on the outer coupling element (48), wherein, particularly preferably, the toothing (46) and the counter-toothing (47) have a sawtooth profile.

8. Device (11) according to any of claims 6 or 7, **characterized in that** the coupling means comprise a guide bushing, which is screwed onto the coupling rod and in which the inner coupling element (43) is mounted axially slideably, wherein, in particular, the coupling means further comprise a housing element which receives the inner coupling element (43), is fixedly connected to the guide bushing and comprises guiding means, which are engaged with suitable counter means of the inner coupling element (43) such that the inner coupling element (43) is connected to the housing element (41) in a torque- proof manner, but axially displaceable relative thereto, wherein, preferably, the guiding means comprise a plurality of, in particular four radially projecting protrusions (44), being distributed over the circumference and the counter means comprise axially extending grooves (45) in engagement with these.

9. Device (11) according to any of the preceding claims, **characterized in that** the joint arrangement is formed as a pivot joint defining a pivot axis (P), which extends transversely, in particular perpendicularly, to the longitudinal axis (X) of the bicycle-side base body (13) and to the lengthwise axis (Y) of the carrier- side base body (14).

10. Device (11) according to any of the preceding claims, **characterized in that** the joint arrangement comprises two joint elements, wherein one joint element is fixedly attached to or a part of the bicycle-side base body (13) and the other joint element (19, 20) is held at the carrier-side base body (14).

11. Device (11) according to claim 10, **characterized in that** the joint elements (19, 20) are movable relative to one another between a blocking position, in which they are in engagement with each other such that the bicycle-side base body (13) and the carrier-side base body (14) are fixed relative to one another, and a release position, in which the joint elements (19, 20) are out of engagement from each other such that the base bodies can be moved relative to one another in order to adjust the angle included therebetween, wherein, in particular, each joint element (19, 20) comprises an engagement toothing (21), preferably a face toothing, facing towards the corresponding engagement toothing (21) of the other joint element (19, 20) respectively such that the engagement toothings (21) of the joint elements (19, 20) are in engagement with each other, when the joint elements (19, 20) are in their blocking position, and out of engagement from each other, when the joint elements (19, 20) are in their release position, and/or wherein, in particular, the joint elements (19, 20) are biased towards their release position, in particular by means of a spring, preferably by means of a helical compression spring.

12. Device (11) according to claim 11, **characterized in that** arresting means are provided in order to arrest the joint elements (19, 20) in their blocking position.

13. Device (11) according to claim 9 and any of claims 10 to 12, **characterized in that** the joint arrangement (15) comprises a pivot pin (18) extending through both joint elements (19, 20), wherein the pivot pin (18) defines the pivot axis (P).

14. Device (11) according to claim 12 and 13, **characterized in that** the arresting means comprise an arresting lever (27), which is pivotably held at one end region of the pivot pin (18) about a swivel axis (S) extending perpendicularly to the pivot axis (P) of the pivot pin (18) such that the arresting lever (27) can be moved pivotably between an arresting state, in which the joint elements (19, 20) are pushed together such that they are in engagement with each other, and a release state in which the joint elements (19, 20) can be spaced apart from each other such that they are out of engagement and the joint elements (19, 20) can be rotated relative to one another about the pivot axis (P), wherein, in particular, the arresting lever (27) comprises an arresting surface (29) which extends parallel to the swivel axis (S) and is spaced apart from the swivel axis (S) such that the two joint elements (19, 20) are pressed together between a head of the pivot pin (18) and the arresting surface (29) into their blocking position, when the arresting lever (27) is in its arresting state.
